Europäisches Patentamt

European Patent Office

Office européen des brevets

(11) Publication number: **0 676 254 A1**

## EUROPEAN PATENT APPLICATION
### published in accordance with Art. 158(3) EPC

(21) Application number: 94927103.5

(22) Date of filing: **27.09.94**

(86) International application number: **PCT/JP94/01581**

(87) International publication number: **WO 95/09064 (06.04.95 95/15)**

(51) Int. Cl.⁶: **B23H 7/02**

(30) Priority: **28.09.93 JP 263073/93**

(43) Date of publication of application: **11.10.95 Bulletin 95/41**

(84) Designated Contracting States: **CH DE LI**

(71) Applicant: **FANUC LTD.**
3580, Shibokusa Aza-Komanba, Oshino-mura
Minamitsuru-gun,
Yamanashi 401-05 (JP)

(72) Inventor: **KITA, Yuki, Room 10-203, Fanuc Manshion Harimomi**
3533-1, Shibokusa,
Oshino-mura, Minamitsuru-gun
Yamanashi 401-05 (JP)
Inventor: **ITO, Masaya, Fanuc Dai-3 Vira-karamatsu**
3527-1, Shibokusa,
Oshino-mura,
Minamitsuru-gun
Yamanashi 401-05 (JP)
Inventor: **FUJITA, Minoru, Fanuc Dai-3 Vira-karamatsu**
3527-1, Shibokusa,
Oshino-mura,
Minamitsuru-gun
Yamanashi 401-05 (JP)

(74) Representative: **Billington, Lawrence Emlyn et al**
**Haseltine Lake & Co**
**Hazlitt House**
**28, Southampton Buildings**
**Chancery Lane**
**London WC2A 1AT (GB)**

(54) **METHOD FOR PREVENTING COLLISION OF A MOVING SHAFT OF A WIRE ELECTRIC DISCHARGE MACHINE.**

(57) A method for preventing collision of a moving shaft of a wire electric discharge machine in which at least one moving shaft (8) is driven and controlled by a servomotor (M) comprising the steps of configuring a control system for a servomotor for the moving shaft (8) which drives and controls at least one moving shaft so as to include therein a disturbance estimating observer, allowing the disturbance observer to estimate the load of a disturbance applied to the moving shaft, comparing the estimated disturbance with a pre-set value, and judging that the moving shaft is brought into collision with an obstacle when the estimated disturbance exceeds the pre-set value, thereby preventing a damage from the collision of the moving shaft of the wire electric discharge machine through the collision detection resulting from the judgement.

EP 0 676 254 A1

Rank Xerox (UK) Business Services
(3.10/3.09/3.3.4)

F I G. 1

1 Z AXIS

7 WORKPIECE

8 CLAMP

2 UPPER NOZZLE

5 WORKPIECE BASE

3 LOWER GUIDE

4 SADDLE

8 AXIS OF MOVEMENT

M MOTOR

40 DISPLAY

30 C N C

20 TORQUE DETECTING PORTION

TECHNICAL FIELD

The present invention relates to wire electric discharge machines and, more particularly, to a method for detecting collision of the axes of a wire electric discharge machine and a obstacle.

BACKGROUND ART

In a conventional wire electric discharge machine, a cutting is executed to a workpiece by moving the workpiece in X and Y directions relative to a wire stretched in a Z direction.

The movements in the X and Y directions are provided by moving a table on which the workpiece is mounted in the X and Y directions. The movement of the table is controlled in accordance with a program input to a numerically controlled apparatus (NC apparatus) of the wire electric discharge machine.

Further, taper cutting is known wherein a taper angle is provided to the cut surface of the workpiece. During such a taper cutting process, the angle of the inclination (taper angle) of the workpiece with respect to a vertical line orthogonal to the surface of the table is controlled. The control of the angle of inclination of the workpiece during the taper cutting is carried out by driving the so-called U and V axes provided on the side of an upper nozzle.

Thus, in a wire electric discharge machine, processing is performed by driving axes of movement such as X, Y, Z, U, and V axes.

However, conventional wire electric discharge machines has the following problems.

In a conventional wire electric discharge machine, axes of movement such as X, Y, Z, U, and V axes can collide with obstacles during their movements. Obstacles that can collide with axes of movement include a workpiece, a table for supporting the workpiece, and a clamp for securing the workpiece on the table. An axis of movement stops its movement when it collides with an obstacle. However, the servomotor for driving the axis of movement generates a great torque to move the axis of movement which has stopped to an instructed position.

A conventional wire electric discharge machine has no collision detecting mechanism. Therefore, when the wire electric discharge machine collides with an obstacle, the impact is continuously applied until the servomotor stops. As a result, the wire electric discharge machine undergoes damages such as breakage of a nozzle and deformation of an arm or quill.

Possible means for solving this problem include (a) a method wherein contact is detected using a touch sensor, (b) a method wherein a positional deviation which is a difference between an instructed position and the actual position reached by a movement is detected and an alarm is generated when the positional deviation is excessively large, and (c) a method wherein an upper limit is set on the value of the driving current of the servomotor; a collision is detected when the upper limit is exceeded; and an alarm is generated to notify of the collision.

However, the above-described methods have the following problems. (a) According to the method wherein contact is detected using a touch sensor, a cost increase for the sensor can not be avoided. Further, this method does not allow detection in places where no sensor is provided. (b) According to the detection based on an excessive positional deviation, the mechanical portion of the wire electric discharge machine can be damaged due to the torque generated by the motor before the positional deviation reaches the excessive value to cause the alarm to be issued. (c) The detection based on an excessive driving current may result in damage to the mechanical portion of the wire electric discharge machine and the workpiece due to possible delay in detection due to the time interval before the current value reaches the upper limit to cause the alarm to be issued.

DISCLOSURE OF INVENTION

It is an object of the present invention to provide a method for preventing collisions of the axes of movement of a wire electric discharge machine which allows reliable detection of a collision between an axis of movement and an obstacle.

It is another object of the present invention to provide a method for preventing collisions of the axes of movement of a wire electric discharge machine wherein damage to a wire electric discharge machine such as breakage of a nozzle and deformation of an arm or quill is prevented.

It is another object of the present invention to provide a method for preventing collisions of the axes of movement of a wire electric discharge machine which requires no sensor.

It is another object of the present invention to provide a method for preventing collisions of the axes of movement of a wire electric discharge machine which is capable of detecting collisions regardless of where sensors are provided.

It is another object of the present invention to provide a method for preventing collisions of the axes of movement of a wire electric discharge machine which involves no delay in detection.

The method for preventing collisions of the axes of movement of a wire electric discharge machine according to the present invention is to be applied to wire electric discharge machines wherein one or more axes of movement are driven and controlled by servomotors. According to this method for preventing collisions of the axes of movement, a disturbance estimating observer is provided in a control system of a servomotor for driving at least one of the axes of movement of a wire electric discharge machine to estimate the load of a disturbance applied to the axis of movement. The estimated magnitude of the disturbance is compared with a set value. A collision of the axis of movement is prevented by detecting the collision by detecting the fact that the estimated magnitude of the disturbance has exceeded the set value.

The disturbance estimating observer according to the present invention is provided in a control system of a servomotor for driving an axis of movement of a wire electric discharge machine and for estimating the torque of a disturbance load from a torque command value given to the motor, the actual speed of the motor and the like. The disturbance load torque estimated by the disturbance estimating observer is generated when the axis of movement of the wire electric discharge machine collides with an obstacle such as a workpiece, a table for supporting the workpiece, and a clamp for securing the workpiece on the table.

The axes of movement of a wire electric discharge machine change relative positions of a workpiece and the wire of the wire electric discharge machine and change the position of the nozzle. For example, there are X, Y, U and V axes for moving a workpiece and a Z axis for moving an upper nozzle in the direction of a Z axis.

According to the method of the present invention, the torque of a disturbance load to at least one of the axes of movement is detected by the disturbance estimating observer; the estimated magnitude of the disturbance is compared with a set value; a collision is detected based on a determination that the axis of movement has collide with an obstacle when the estimated magnitude of the disturbance exceeds the set value; and the collision of the axis of movement is prevented by performing control including stoppage of the motor.

The prevention of a collision may be adapted to all axes of movement or to any one or more axes of movement of a wire electric discharge machine.

The set value to be compared with an estimated disturbance may be arbitrarily set. For example, the set value may be set to a value which is greater than the static friction etc. and the gravity term of the mechanical portion for driving the axes of movement and smaller than the destructive limits of the mechanical portion and the workpiece. Such setting allows a motor to be stopped based on reliable detection of a collision before the mechanical portion and the workpiece are destroyed.

BRIEF DESCRIPTION OF THE DRAWINGS

Fig. 1 is a block diagram of a configuration for implementing a method for preventing collisions of the axes of movement of a wire electric discharge machine according to the present invention.

Fig. 2 is a block diagram of a disturbance estimating observer used in an embodiment of the present invention.

Fig. 3 is a block diagram of a servomotor control system.

Fig. 4 is a block diagram of a model for the configuration of a disturbance estimating observer.

Fig. 5 is a flow chart of position and speed loop processes and the process of the disturbance estimating observer according to the embodiment performed by a digital servo processor.

BEST MODE FOR CARRYING OUT THE INVENTION

[Configuration for the Implementation of the Invention]

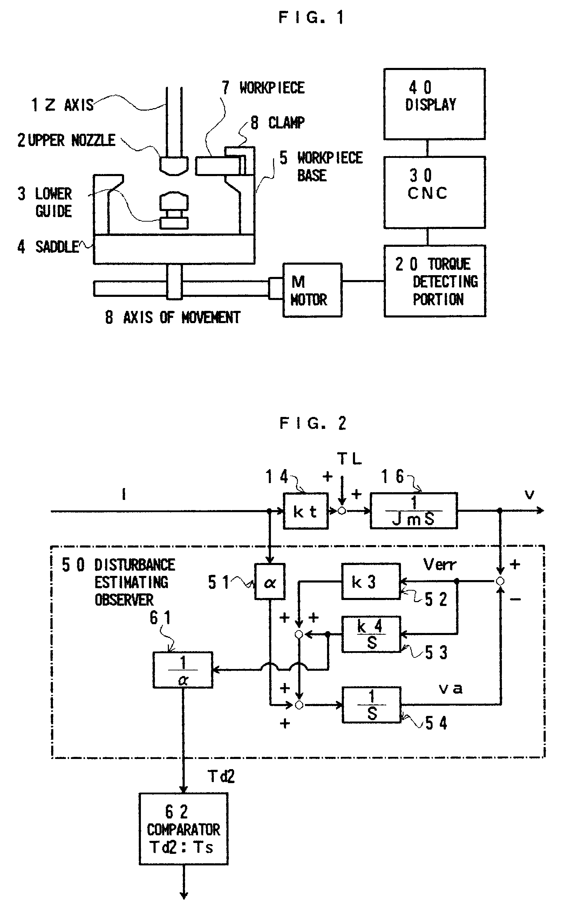

First, a description will be made on an example of a configuration for implementing the method of preventing collisions of the axes of movement of a wire electric discharge machine according to the present invention with reference to a block diagram shown in Fig. 1. The block diagram in Fig. 1 shows only the configuration of a part of a wire electric discharge machine.

In Fig. 1, a Z axis 1 guides a wire (not shown) delivered from a wire delivery portion which is not shown in to an upper nozzle 2. For example, the Z axis 1 may be configured to have a pipe-shaped structure.

The Z axis 1 can be moved by a driving device (not shown) to adjust the distance thereof from a workpiece 7 or a table.

EP 0 676 254 A1

The upper nozzle 2 inserts the supplied wire into the workpiece 7. Further, the upper nozzle 2 supplies the area of the workpiece 7 in which electric discharge machining is to be performed with working fluid to remove sludge generated at the worked area and to cool the area.

A lower guide 3 is provided in a position wherein it faces the upper nozzle 2. The lower guide 3 guides the wire to a wire take-up portion (not shown). The lower guide 3 also supplies the area of the workpiece 7 in which electric discharge machining is to be performed with working fluid to remove sludge generated at the worked area and to cool the area.

The workpiece 7 is secured to a workpiece base 5 by a clamp 6 and to be subjected to electrical discharge machining. The workpiece base 5 is placed on a table. The table is configured so that it can be moved in the directions of X, Y, U, and V axes. Such a configuration of the table allows the movement of the table in X and Y directions and control of the inclination of the workpiece. The movement of each axis is provided by driving the axis of movement using a motor M.

The example in Fig. 1 illustrates a case wherein a saddle 4 of the table is moved by an axis of movement 8.

According to the present invention, a CNC 30 receives the value of the torque of the motor M that is detected by a torque detecting portion 20 and controls the motor M.
Further, a display 40 is connected to the CNC 30.

[Configuration of Disturbance Estimating Observer]

A description will now be made on a configuration of the disturbance estimating observer used for the method of preventing a collision of an axis of movement according to the invention.

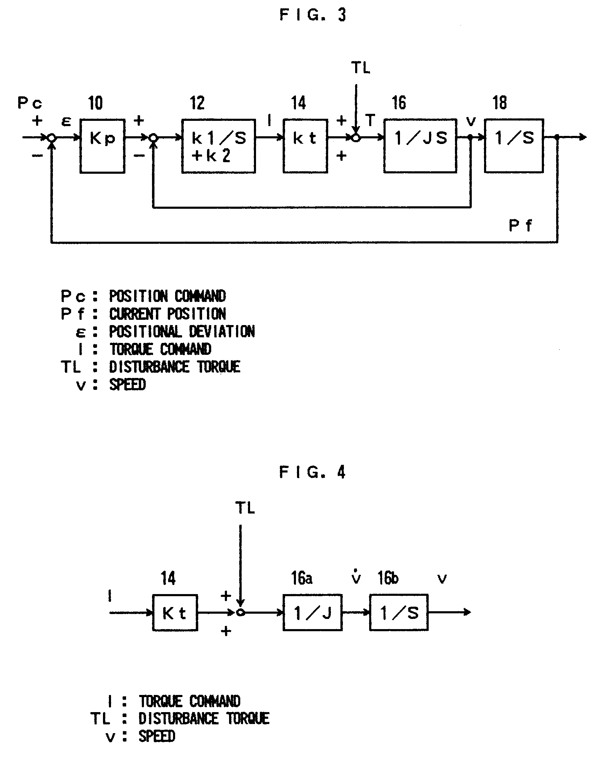

According to the method of preventing collision of an axis of movement according to the invention, a collision of an axis of movement with an obstacle is detected from a disturbance estimated by the disturbance estimating observer. Fig. 3 is a block diagram of a servomotor system which performs proportional (P) control of position and proportional integral (PI) control of speed. In Fig. 3, kp of a transfer function 10 designates a proportional gain in a position loop, and a transfer function 12 is a transfer function in a speed loop. In the transfer function 12, k1 designates an integration constant and k2 designates a proportion constant. Transfer functions 14 and 16 are transfer functions of the motor. In the transfer functions 14 and 16, kt designates a torque constant and J designates inertia. A transfer function 18 is a transfer function for calculating a position Pf by integrating speed v. TL designates a disturbance torque.

As shown in Fig. 3, a feedback value of the current position Pf is subtracted from a position command Pc to obtain a positional deviation $\epsilon$ ( = Pc - Pf). The positional deviation $\epsilon$ is multiplied by the proportion constant kp to obtain a speed command value. A deviation in speed is obtained from the difference between the speed command value thus obtained and the actual speed v. The transfer function 12 performs PI control on the deviation in speed thus obtained to obtain a current value I as a torque command value. The current I is applied to the winding of the motor to drive the same. The transfer function 18 integrates the speed v of the motor to obtain the position pf.

A disturbance estimating observer is provided for the servomotor shown in Fig. 3. First, a description will be made on a conventional disturbance estimating observer with reference to a digital servo control system wherein servo control of a servomotor is performed by a processor.

Fig. 4 is a block diagram of a model for an observer of a servomotor. In Fig. 4, 14 designates the transfer function having a torque constant kt of the servomotor shown in Fig. 3. In Fig. 4, the transfer function 16 in Fig. 3 is divided into a transfer function 16a of the inertia J and an integration term 16b. Further, in Fig. 4, I designates a torque command as an input; v designates speed, and TL designates a disturbance torque.

If an observer of the same dimensions for estimating the speed v and the disturbance torque TL is configured in the model shown in the block diagram in Fig. 4 using common techniques for configuring an observer, the observer indicated by the reference number 50 in Fig. 2 will be obtained. The block 50 shows a configuration of the disturbance estimating observer.

k3 and k4 shown in terms 52 and 53 of the disturbance estimating observer 50 are parameters of the disturbance estimating observer. $\alpha$ in a term 51 is the value of a parameter which is a multiplier for the current value I used as the torque command actually output to the servomotor and is expressed by ($\alpha$ = kt*/Jm*) which is an estimated value kt* of the torque constant of the motor divided by an estimated value Jm* of the inertia.

54 designates an integration term which is a term for integrating the sum of all of the outputs of the terms 51, 52, and 53 to obtain an estimated speed va of the motor. The term 55 is a term for multiplying the output of the term 53 by (1/$\alpha$) to obtain an estimated disturbance torque Td2.

5

The analysis in the disturbance estimating observer proceeds as shown in the block diagram shown in Fig. 2. The analysis is made on the assumption that $\alpha$ = kt*/Jm*; the torque constant kt of the motor is equal to the estimated value kt* (kt = kt*); and the inertia Jm of the motor is equal to the estimated value Jm* (Jm = Jm*).

The calculation of the term 16 gives

$$(I \cdot kt + TL)(1/Jm \cdot S) = v. \qquad (1)$$

The output va of the term 54 is given as follows:

$$\{I \cdot (kt/Jm) + (v-va)k3 + (v-va)(k4/S)\} \cdot (1/S) = va. \qquad (2)$$

Equation (1) is transformed into the following equation (3):

$$I = (v \cdot Jm \cdot S-TL)/kt. \qquad (3)$$

Further, Equation (2) is changed as follows with Equation (3) substituted therein:

$$(v \cdot Jm \cdot S-TL)/Jm + (v-va)k3 + (v-va)(k4/S) = va \cdot S, \qquad (4)$$
$$S(v-va) + (v-va) \cdot k3 + (v-va)(k4/S) = TL/Jm. \qquad (5)$$

Verr (= v-va) is obtained from Equation (5) as follows:

$$Verr = v-va = (TL/Jm)[1/\{S + k3 + (k4/S)\}]. \qquad (6)$$

From Equation (6), the output Td1 of the term 53 is expressed by Equation (7) as shown below:

$$Td1 = Verr \cdot (k4/S) = (TL/Jm)\{k4/(S^2 + k3 \cdot S + k4)\}. \qquad (7)$$

If the parameters k3 and k4 are selected so that the poles are stabilized, Equation (7) can be approximated by Td1 = TL/Jm. This relational equation indicates that the total disturbance torque Td1 can be estimated.

In the term 61, the total disturbance torque Td1 is multiplied by $1/\alpha(= Jm*/kt*)$ to obtain an estimated disturbance torque Td2.

A comparator 62 compares this estimated disturbance torque Td2 with a value Ts set for detecting a collision. If the comparison indicates that the estimated disturbance torque Td2 is greater than the set value Ts, a determination is made that a collision has occurred. Then, an alarm or the like is output; the value of the integrator in the speed loop is set to "0"; and the subsequent speed command is set to "0" to stop the motor.

The value Ts for detecting a collision is set to a value which is greater than the static friction and the like and the gravity term of the mechanical portion for driving the axis of movement and smaller than the destructive limits for the mechanical portion and the workpiece. Such setting makes it possible to ensure that the motor is stopped based on reliable detection of a collision before the mechanical portion and the workpiece are destroyed.

[Operation of the Embodiment of the Invention]

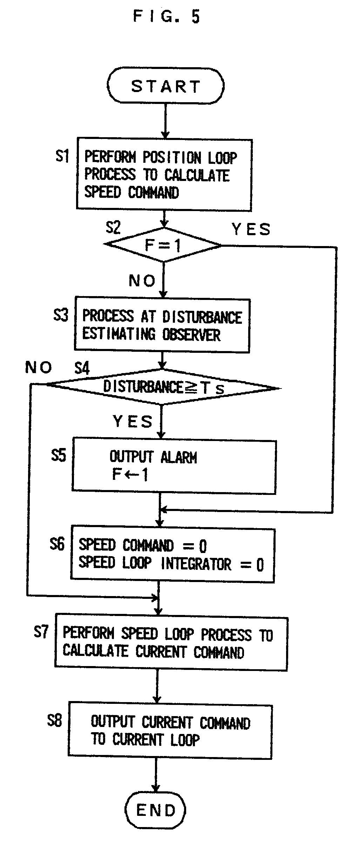

The operation of the embodiment having the above-described configuration will now be described. Fig. 5 is a flow chart showing a process which is performed by a digital servo (software servo) processor for each processing cycle of the position and speed loops. In the following description, a reference symbol "step S" will be used.

The digital servo (software servo) processor performs position loop process similar to that in the prior art to calculate a speed command from a position command output by a numerically controlled apparatus and the current position (a feedback value of the position) detected by a pulse coder or the like attached to a servomotor (step S1).

Next, the processor determines whether a flag F is set to "1" or not (step S2). This flag F is set to "0" during initialization. The flag F remains at "0" if there is no collision and is set to "1" if there is a collision.

If the value of the flag F is not "1, the processor executes the processes at the disturbance estimating observer 50 and the blocks 61 and 62 shown in Fig. 2 to obtain an estimated disturbance torque Td2 (step S3). It is determined whether the estimated disturbance torque Td2 thus obtained is equal to or greater than a value Ts set for detecting a collision (step S4).

If it is determined that the estimated disturbance torque Td2 obtained as described above is smaller than the set value Ts, a speed loop process similar to that in the prior art is performed based on the speed command obtained in the process at step S1 and the actual speed of the servomotor detected by a speed detector such as a pulse coder attached to the servomotor.

The processor calculates a current command (torque command) through the speed loop process and passes the current command to a current loop. After passing the current command to the current loop, the processor terminates the process in the cycle (step S7 and step S8).

On the other hand, if it is determined at step S4 that the estimated disturbance torque Td2 calculated is equal to or greater than the set value Ts, the processor determines that a collision has occurred and outputs an alarm. Then, the flag F is set to "1"; the speed command is set to "0"; and the integrator in the speed loop is set to "0" (step S5 and step S6).

The processor then performs the speed loop process at step S7 with both of the speed command and the integrator of the speed loop set to "0", to obtain a current command and passes the obtained current command to the current loop. The alarm can be provided by indicating the collision on the display 40 or by issuing a warning tone.

For the subsequent cycles, the flag F is set to "1". Therefore, the step S2 is followed by step S6. The processor then performs the speed loop process with both of the speed command and the integrator of the speed loop set to "0", to obtain a current command and passes the obtained current command to the current loop.

The method for preventing a collision in the above-described embodiment may be adapted to all axes of movement or to any one or more axes of movement of a wire electric discharge machine.

Further, the set value to be compared with an estimated disturbance may be arbitrarily set. For example, it may be set to a value which is greater than the static friction etc. and the gravity term of the mechanical portion for driving the axes of movement and smaller than the destructive limits of the mechanical portion and the workpiece. Such setting allows the motor to be stopped based on reliable detection of a collision before the mechanical portion and the workpiece are destroyed.

Thus, the motor can be stopped before the mechanical portion and the workpiece are destroyed as a result of reliable detection of the collision.

As described above, the present invention makes it possible to provide a method for preventing collisions of the axis of movement of the wire electric discharge machine which reliably detects the collision of the axis of movement with the obstacle.

**Claims**

1. In a wire electric discharge machining apparatus wherein at least one axis of movement is provided and machining is controlled by driving and controlling said axis of movement by a servomotor, a method for preventing a collision of the axis of movement of the wire electric discharge machining apparatus wherein a disturbance estimating observer is configured in a control system of the servomotor for driving at least one of said axes of movement comprising the steps of:
   estimating the load of a disturbance applied to said axis of movement using said disturbance estimating observer;
   comparing the magnitude of said estimated disturbance with a set value; and
   detecting a collision of the axis of movement based on the result of said comparison.

2. The method for preventing a collision of the axis of movement of the wire electric discharge machining apparatus according to Claim 1, wherein said set value is a value smaller than the destructive limit of the mechanical portion for driving the axis of movement.

3. The method for preventing a collision of the axis of movement of the wire electric discharge machining apparatus according to Claim 1, wherein said set value is a value smaller than the destructive limit of a workpiece.

4. The method for preventing a collision of the axis of movement of the wire electric discharge machining apparatus according to Claim 1, wherein said set value is a value greater than the static friction term of the mechanical portion for driving the axis of movement.

5. The method for preventing a collision of the axis of movement of the wire electric discharge machining apparatus according to Claim 1, wherein said set value is a value greater than the gravity term of the mechanical portion for driving the axis of movement.

EP 0 676 254 A1

FIG. 1

FIG. 2

9

EP 0 676 254 A1

F I G. 3

Pc : POSITION COMMAND
Pf : CURRENT POSITION
ε : POSITIONAL DEVIATION
I : TORQUE COMMAND
TL : DISTURBANCE TORQUE
v : SPEED

F I G. 4

I : TORQUE COMMAND
TL : DISTURBANCE TORQUE
v : SPEED

10

FIG. 5

```
                    ┌──────────────┐
                    │    START     │
                    └──────┬───────┘
                           │
                           ▼
        ┌──────────────────────────────┐
     S1 │ PERFORM POSITION LOOP         │
        │ PROCESS TO CALCULATE          │
        │ SPEED COMMAND                 │
        └──────────────┬───────────────┘
                       │
            S2        ▼          YES
           ◇─────────────────◇──────────────┐
            ╲    F = 1      ╱                │
             ◇─────────────◇                 │
                  │ NO                        │
                  ▼                           │
        ┌──────────────────────────────┐     │
     S3 │ PROCESS AT DISTURBANCE        │     │
        │ ESTIMATING OBSERVER           │     │
        └──────────────┬───────────────┘     │
                       │                      │
    NO      S4         ▼                      │
     ┌────◇──────────────────────────◇        │
     │     ╲  DISTURBANCE ≧ T s      ╱        │
     │      ◇────────────────────────◇        │
     │              │ YES                      │
     │              ▼                          │
     │   ┌──────────────────────────┐          │
     │ S5│      OUTPUT ALARM         │          │
     │   │        F ← 1             │          │
     │   └──────────┬───────────────┘          │
     │              │                           │
     │              ▼◄─────────────────────────┘
     │   ┌──────────────────────────────┐
     │ S6│ SPEED COMMAND  = 0            │
     │   │ SPEED LOOP INTEGRATOR = 0     │
     │   └──────────────┬───────────────┘
     │                  │
     └─────────────────►▼
        ┌──────────────────────────────┐
     S7 │ PERFORM SPEED LOOP PROCESS TO │
        │ CALCULATE CURRENT COMMAND     │
        └──────────────┬───────────────┘
                       │
                       ▼
        ┌──────────────────────────────┐
     S8 │ OUTPUT CURRENT COMMAND        │
        │ TO CURRENT LOOP               │
        └──────────────┬───────────────┘
                       │
                       ▼
                ┌─────────────┐
                │     END     │
                └─────────────┘
```

## INTERNATIONAL SEARCH REPORT

| International application No. |
|---|
| PCT/JP94/01581 |

### A. CLASSIFICATION OF SUBJECT MATTER

Int. Cl$^6$  B23H7/02

According to International Patent Classification (IPC) or to both national classification and IPC

### B. FIELDS SEARCHED

Minimum documentation searched (classification system followed by classification symbols)

Int. Cl$^5$  B23H7/02, B23H7/26

Documentation searched other than minimum documentation to the extent that such documents are included in the fields searched

Jitsuyo Shinan Koho          1926 - 1994
Kokai Jitsuyo Shinan Koho     1971 - 1994

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP, A, 59-73231 (Mitsubishi Electric Corp.), April 25, 1984 (25. 04. 84), Line 3, upper right column to line 4, lower left column, page 2, Fig. 1, (Family: none) | 1-5 |
| A | JP, A, 3-136722 (Mitsubishi Electric Corp.), June 11, 1991 (11. 06. 91), Line 12, upper left column to line 4, upper right column, page 2, Fig. 1, (Family: none) | 1-5 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| December 6, 1994 (06. 12. 94) | December 27, 1994 (27. 12. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)